# EUROPEAN PATENT APPLICATION

(11) **EP 1 344 463 A2**
(43) Date of publication of application: **17.09.2003**
(21) Application number: 03251268.3
(22) Date of filing: 04.03.2003
(51) Int. Cl.: A24C 5/35

(54) **Conveyor for rod-like articles**

(30) Priority: 12.03.2002 GB 0205757
(71) Applicant: MOLINS PLC, Blakelands, Milton Keynes MK14 5LU (GB)
(72) Inventor: Hammock, Mike, Buckinghamshire MK17 OAP (GB); Brown, Anthony R., Aylesbury, Buckinghamshire HP19 8SX (GB); Richardson, Alan K., North Marston, Buckinghamshire MK18 3PJ (GB); Carascon, Walter, East Claydon, Buckinghamshire MK18 2NB (GB); Walford, Gary T., Buckinghamshire HP27 9AT (GB)
(74) Representative: Harries, Simon George

(57) **Abstract**

There is provided a conveyor system for rod-like articles comprising a conveyor means (12), preferably forming a spiral (14) path round and between two cylindrical drums (18, 20) whereby the conveyor has a first and second elongate conveyor length extending towards and away from at least one of the drums (18) and having a transmission length extending therebetween and about an axis of said drum for changing the direction of the conveyor about this axis, whereby the first elongate length is at least partially displaced axially with respect to the second elongate length but wherein the transmission length is maintained in a first plane about the drum member, this plane being perpendicular to the drum axis. There is also provided a reservoir system comprising a conveyor arrangement of this type.

## Description

The current invention relates to conveyors for rod-like articles, particularly articles of the tobacco industry such as cigarettes or filter rods.

In the manufacture of articles of the tobacco industry it is common practice to transport the articles directly from the manufacturing equipment where such articles are made to a receiving device such as a packing machine in the case of cigarettes. The articles themselves are usually conveyed in the form of a continuous multi-layer stream of articles or "carpet" moving in a direction transverse to the lengths of the articles themselves.

In common practice the depth of such carpets are 50-100mm in height.

In addition, due to the complex nature of both the manufacturing and packaging machines used in the tobacco industry, and the high volumes of product produced and packaged per machine, it is found that if one of these machines is forced to shut down as a result of a process failure, a considerable volume of product is often left in the machine which, due to the nature of these products, often means that such left product has to be simply disposed of once the machine is restarted. Similarly, since the machines operate concurrently so as to maintain operation of both machines, it is found that if a problem is incurred in one machine such as the packaging machine, then the conveyor system between the manufacturing machine and the packaging machine will often back-up very quickly necessitating a shut-down of the corresponding machine of the pair. Thus, the problem is duplicated whereby excess product held in both machines while they are shut-down necessitates the disposal of twice as much product. For this reason, it is highly desirable that such conveyors be used in a buffer reservoir provided to compensate for any difference in the number of products produced and the number to be packed.

There are two primary types of buffer reservoir used for this purpose, the first of which is referred to as a FIFO reservoir (first in first out) whereby such reservoirs comprise a conveyor belt for receiving product and transporting such product around a stacked loop, often in the form of a spiral, between an input station and an output station, whereby the output station is remote from the input station, such that the conveyor belt only travels in one direction so that the first product to be received in such a buffer reservoir is also the first product out, irrespective of whether or not the reservoir is maintained in continuous operation. It is common practice for such FIFO reservoirs to be of adjustable length whereby the dimensions between parallel supports of such spiralled belts are adjustable to and away from one another thereby increasing or decreasing the belt length as required to adjust capacity. In this manner if the packaging machine were to become inoperative, then by adjusting the distance between the supports of the spiral of such a FIFO reservoir, the belt length is increased and by appropriate variation of the input and output speed of the belt (the input speed may in fact be maintained constant while the output speed could be completely stopped) the excess product being fed into the reservoir is accommodated by the increase in length of the belt around the various spirals even if no product is output. Usually belts of this type are those of the type referred to as continuous endless belts which have an associated adjustment means accommodating part of the belt not carrying product, whereby a corresponding adjustment of this non product carrying length will either provide additional belt for lengthening the spiral or will accommodate belt length as the spiral is reduced in length. Example of this type of FIFO equipment is seen in European Patent No. 0738478 and WO 99/44446.

Alternatively, a second type of buffer reservoir is referred to as a FILO reservoir (first in last out). Here it is common place for the flow path of the carpet from the manufacturing machine to conventionally flow along one branch of a T-junction and to be transmitted down the main trunk of such T-junction to the packaging machine. In the event that the packaging machine is unable to cope with the volume of product from the manufacturing machine, the T junction serves to divert the product via the second branch to an input station of a, usually, spiral endless conveyor which transports the product away from this input station during the storage buffer period. Subsequently, when additional storage is no longer required, the displacement of the belt in the spiral buffer is stopped and product from the manufactured equipment is then diverted back directly to the packaging machinery. In this respect, a carpet of product is now maintained in the buffer reservoir and should there be a disruption to the manufacturing process the conveyor of the buffer reservoir can be reversed so as to transport such stored product in a reverse direction along the spiral conveyor back towards the input station so that it can be transferred to the T-junction and thus to the packaging machine. In this respect it will be appreciated that the first product to enter such a buffer reservoir will also be the last product out. An example of a FILO buffer reservoir of this type is shown in US Patent No. 5361888.

Both FILO and FIFO reservoirs work on the principle of providing a stepped array of branches, usually in a spiral formation, to provide additional conveyor path lengths between the various workstations thus allowing a maximum volume of product to be stored in equipment occupying minimum floor space. However, this necessitates a complex and continuous change of direction of the conveyor belt to form such spiral arrangements. Of the devices discussed in the prior art mentioned above, this usually necessitates passing the conveyor around a drum or other arcuate member between adjacent branches of such spiral arrangements, whereby these adjacent branches are usually set on different planes as the spiral increases in height with arcuate path lengths of the conveyor about such drums being inclined relative to the axis of such drum to effect the change in level of the conveyor. This is common in all types of conveyor systems used in this industry. However, it has been found that the change in direction of the conveyor places stresses on the carpet of product and such stresses are intensified if this arcuate displacement also includes an inclination relative to the axis of rotation, which can be potentially damaging to the delicate products being transported.

It is therefore an object of this present invention to provide a conveyor system for rod like articles which alleviates the aforementioned problems.

According to the present invention there is now provided a conveyor system for rod like articles comprising a conveyor means having a first elongate conveyor length and a second elongate conveyor length and having transmission length extending therebetween, this transmission length being supported by and extending around at least one upright transmission member having a transmission axis for changing the direction of the conveyor about this axis, the first elongate length being at least partially displaced in an axial direction with respect to the second elongate length, wherein the transmission length is maintained in a first plane about the transmission member, this first plane being perpendicular to the axis. Usually the upright member will comprise a vertical axis so that the first plane will be horizontal when perpendicular thereto.

Preferably, at least one of the first and second conveyor lengths will be inclined relative to the first plane along at least part of its length remote from the transmission means thereby effecting the necessary axial displacement of that length. The angle of inclination will usually be between 1° and 15° relative to the first plane and, preferably set at 7°.

Preferably, the inclination is achieved wherein the or each of the first and second lengths will be supported by an inclined guide to effect this axial displacement of the associated length. Usually these inclined guides will only extend partway along the associated length whereby the remaining part of that length will lie in a plane parallel to the first plane. However, it is also possible for the entire one of the first or second lengths to be inclined along their entire length.

Preferably, such conveyor systems will comprise at least two upright transmission members whereby each of these two transmission members will have associated therewith a first and second conveyor length with an associated transmission length extending therebetween and about the associated transmission member with at least one of the transmission lengths being maintained in a first plane about its associated transmission member. Preferably, both of the transmission lengths are maintained in associated first planes about there associated transmission members so as that both first planes are parallel to one another and may in fact lie in the same plane.

Usually, each of the transmission lengths will define an arcuate path about its transmission member whereby this arcuate path of the conveyor is supported on an arcuate support member mounted on the respective transmission member in the first plane. Usually such arcuate support members will comprise a wheel.

Preferably, the conveyor means will define a first spiral path about and between the at least two transmission members, usually this first spiral length being adjustable, adjustment usually being effected wherein one of the two transmission members is displaceable relative to the other.

To assist this and other embodiments, the conveyor means itself would preferably comprise a continuous endless conveyor.

In one embodiment, the endless conveyor may comprise an adjustable product conveying length formed by the first spiral path and associated conveyor take up length with conveyor take up length adjustment means for effecting complimentary increase or decrease in the take up length to compensate for complimentary decrease or increase in the first spiral length. Usually, this conveyor take up length will also define a complimentary take up spiral length which length is adjusted in a complimentary fashion between two take up transmission members, whereby one of the take up transmission members is displaceable relative to the other. It is preferable whereby the adjustable transmission member of the conveyor take up spiral is coincident with the displaceable transmission member of the first spiral. Here, it is preferable that the transmission lengths of the first spiral and the transmission lengths of the take up spiral extending about their coincident transmission member be interleaved, one between the other.

Further according the present invention there is now provided a reservoir system comprising a conveyor system as previously described wherein the conveyor means may flow in a single direction about the transmission means to provide a first in first out reservoir or alternatively the conveyor means may flow in both directions about the transmission means to provide a first in last out reservoir.

Preferred embodiments of the present invention will now be described, by way of example only, with reference to the accompanying illustrative drawings in which:
Figure 1 is a perspective schematic view of a variable capacity reservoir according to the present invention; and
Figure 2 is a perspective view of a variable capacity reservoir belt path of the schematic of Figure 1; and
Figure 3 is a plan view, from above, of the variable capacity reservoir of Figure 2; and
Figure 4 is a perspective view of the adjustable drum member of the reservoir of Figure 2; and
Figure 4a is a cross sectional view of an adjustable drum of Figure 4 and of the reservoir of Figure 3 along the lines IV-IV; and
Figure 4b is a plan view of a part length of the conveyor belt of Figure 2; and
Figure 4c is a cross sectional view of the conveyor belt of Figure 4b along the lines V-V; and
Figure 5 is a side elevation of a height adjustment guide of the reservoir of Figure 2; and
Figure 6 is a partial side elevation of the flow path about the reservoir of Figure 2 showing the height adjustment of the conveyor belt about an end drum; and
Figure 7 is a schematic view of an conveyor path of a reservoir according to an alternative embodiment; and
Figure 7a is plan view from above of the alternative embodiment of a reservoir as shown schematically in Figure 7; and
Figure 7b is a side elevation of the alternative reservoir of Figure 7a.
Figure 7c is a schematic illustration of a headboard design for the reservoir shown in Figures 1 and Figure 7.
Figure 8 is a partial schematic side view of further alternative embodiment of a reservoir according to the present invention; and
Figure 9a is a plan view from above of the reservoir of Figure 2 with the adjustable drum in one end position; and
Figure 9b is a plan view from above of a reservoir having the path configuration of Figure 7 with the adjustable drum in one end position; and
Figure 10a is a perspective view of an idler wheel for the reservoir Figure 1; and
Figure 10b is a side view of the idler wheel of Figure 10a; and
Figure 10c is a plan view of the idler wheel of Figure 10a, showing in cross section a conveyor belt mounted thereon in a first orientation.

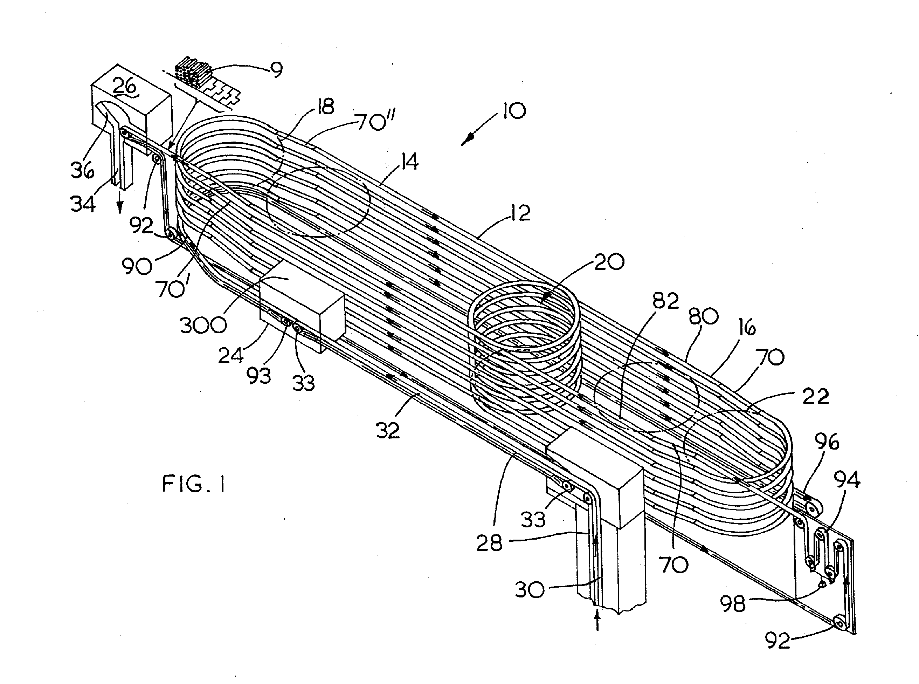

Figure 1 shows, schematically, a conveyor path for a variable capacity reservoir (10) for elongate articles such as cigarettes or filter rods (9) (shown as example in exploded view in Figure 1), having a continuous endless conveyor belt (12) extending in two complimentary spiral paths (14) and (16), the first spiral path (14) extending around and between a first, stationery drum member (18) (shown schematically in Figure 1) and a second adjustable, drum member (20) (the structure of which is omitted for clarity from Figure 1 but will be described in more detail later). The second spiral path (16) extends between the second drum member (20) and a third drum member (22) (again shown schematically with structure removed in Figure 1).

This reservoir (10), as is conventional, comprises a product input station shown generally at (24) and a product output station shown generally at (26).

In practice, cylindrical rods such as cigarettes (or filters used in the cigarette manufacturing industry) are fed from a manufacturing machine along a conventional product input flow path (28) which comprises a substantially vertical channel (30), undergoing a substantially 90° turn at the top thereof, for product to be transported by a conventional conveyor belt (32) to the input station (24). Product delivery systems of this type are commonly used with this type of First In First Out reservoir and, since they do not form part of the current invention, will not therefore be described in any great detail herein.

Similarly, the product output station (26) is again conventional for this type of First In First Out (FIFO) variable capacity reservoir and comprises a substantially vertical delivery chute (34) into which the product (cigarettes or filters) are dropped. This output station (26) is provided with guide surfaces (36) to aid the smooth flow of the product into the channel (34). Again, the product output station itself does not form part of the current inventive concept and therefore will not be described in great detail herein. Both the input station and output station shown in Figure 1 are for illustrative purposes only and there are known to be a large number of varieties of such product input and product output stations within this field of technology any or all of which may be utilised with the current invention.

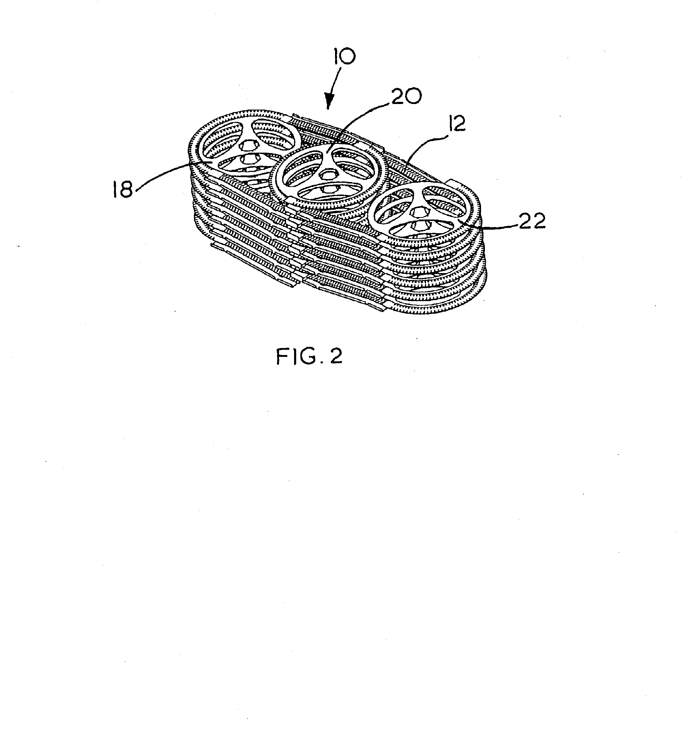

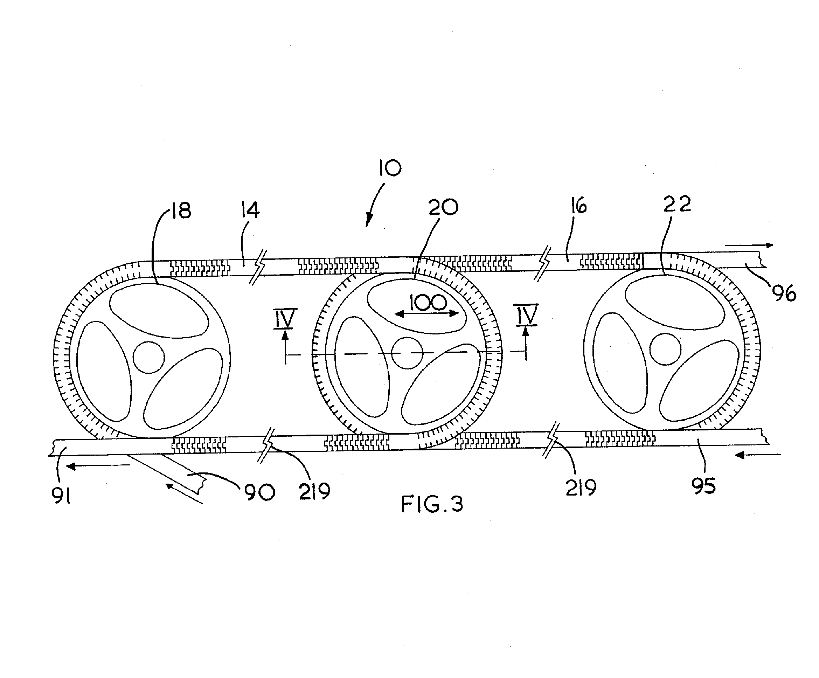

Referring now to Figure 2, this perspective view shows the schematic conveyor path configuration of Figure 1 in a practical application showing the conveyor (12) extending round the first (18), second (20) and third (22) drum members respectively. It is important to note here that the relative distance between the first, second and third drums shown in Figure 2 is different to the schematic view shown in Figure 1 but the principle here remains the same and, as will be explained later, the lengths between these drum members may be preset dependent on the particular variable reservoir capacity required by the end user. Figure 1 is illustrative of an example of a reservoir having an extremely large capacity and also a very large variation in that capacity whereby that shown in Figure 2 illustrates a smaller volume reservoir having a significantly reduced variation in capacity since the second (20) drum member is only able to undergo significantly limited displacement from left to right as viewed in Figure 2 between the outer drum members (18) and (22). Figure 2 is illustrative only, and it will be appreciated that in practice, there will be a minimum distance between the outer drums (18) and (22) to allow for minimal displacement of the adjustable drum member (20) therebetween as will be described later. However, Figure 2 and the corresponding illustrative conveyor length breaks (21) (shown schematically in Figure 3) are merely to illustrate that this type of reservoir can be made to different sizes to accommodate different capacities by appropriate spacing between the outer drums (18) and (22). However, the principle of operation remains the same and Figure 2 is shown (without product input or product output paths) to illustrate the relationship of the belt (20) about the drums (18), (20) and (22).

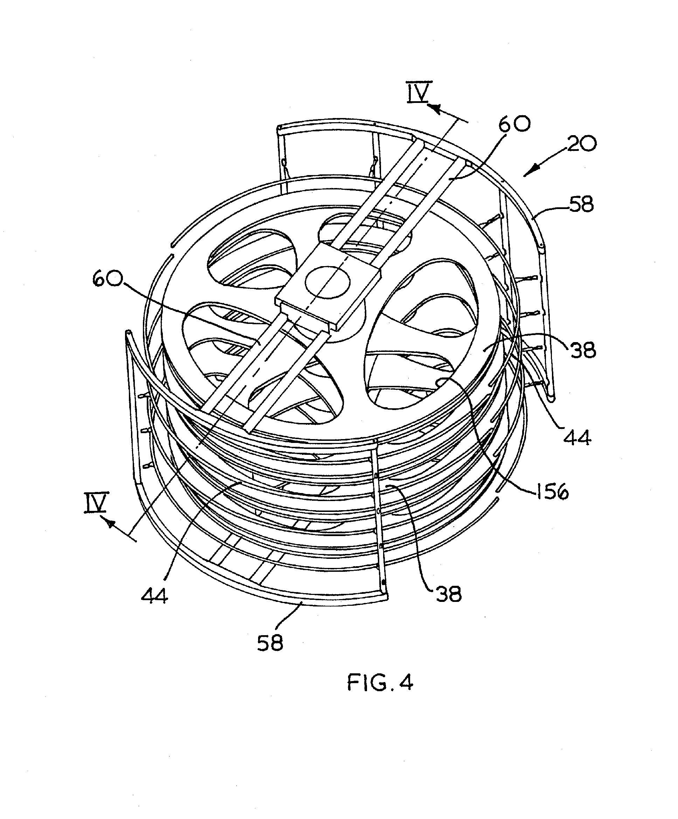

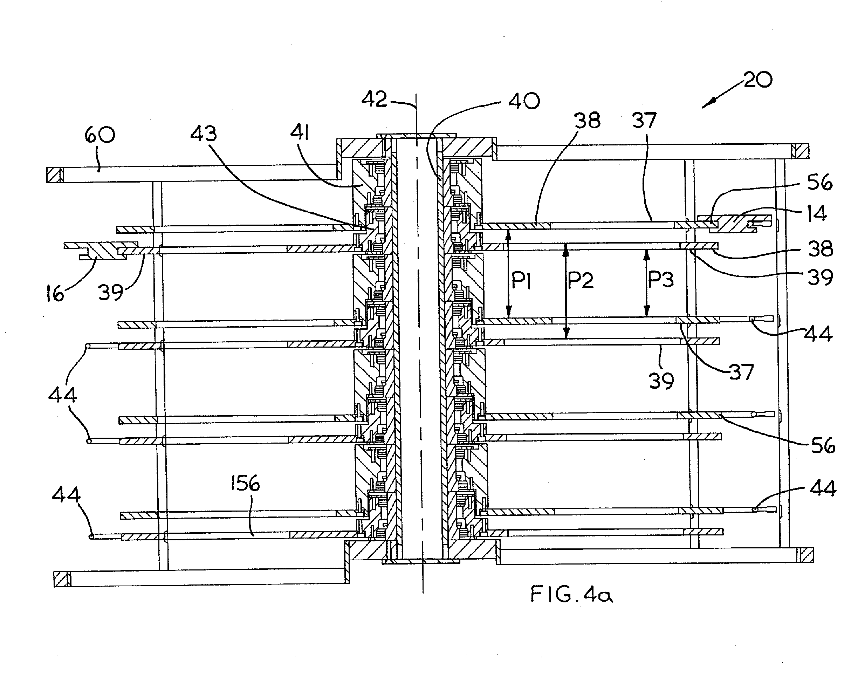

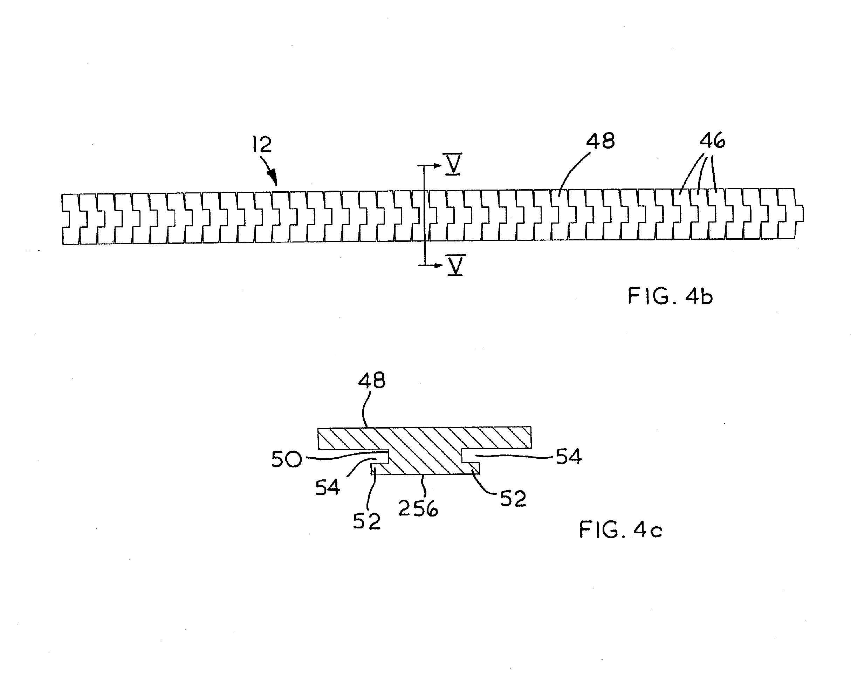

The three drums, which act as transmission members, are themselves substantially identical and, referring to Figures 4 and 4a, will now be described in detail. Figure 4 shows a perspective view of the central adjustable drum (20) in perspective. The drum is provided with a series of discs (38) which are secured about a central, non rotatable column (40) having a central axis (42). The central drum (20) is designed to carry one end of each of the spiral paths (14) and (16) of the conveyor (12) and thus the discs are arranged in pairs one of each pair to alternatively support a branch of each spiral path. In this particular embodiment, the upper disc (37) of each pair carries the first spiral path (14) whilst the lower associated disc (39) carries the second spiral path (16).

The number of pairs of discs is dependent on the overall capacity required for the reservoir and can be increased by increasing the height of the drum (20). In particular, it can be seen that each disc (37, 39) is mounted on an associated collar (41, 43) respectively (Figure 4a) which collars are rotatably mounted about the column (40). Each collar (41, 43) defining the spacing between the various discs (38) in the drum structure. By varying the size of the collars (41) and (43) different spacing between the discs can be achieved. In this particular embodiment, the pitch P1 between successive top discs (37) is constant as is the pitch P2 between successive lower discs (39). However, if desired, it is feasible by adjustment of the respective collar heights to provide drums with varying pitches P1 and P2 as desired.

It will be appreciated from Figure 1 and a basic understanding of a spiral path arrangement with parallel sides extending between two drums, that the conveyor spiral paths (14, 16) passing around the drum (20) will, in fact, only engage with its associated disc (37, 39) over half of the circumference of that disc. In this embodiment, the drum (20) therefore has associated arcuate bar members (44) providing outer guide surfaces to assist support of the conveyor (14) and (16) about the drum.

This is better understood with reference to Figure 4c showing a conveyor belt in cross section. It is well known for conventional conveyor belts used in this type of system to be made up of a large number of individual link elements (46) held together by overlapping parts having pin members extending therethrough. Referring now to Figure 4c, a conventional belt element (46) design comprises a substantially T-shaped cross section having a broad upper platform (48) for supporting the products to be carried thereon, and extending downwardly from this platform (48) is a perpendicular trunk member (50) having two outwardly extending flanges (52) disposed either side thereof, parallel with the upper platform (48) but having a substantially reduced width compared thereto. These flanges (52) present two channels (54) on either side of the trunk (50). Conveyor designs of this type are well known in the industry and provide for improved conveyor strength and provides for positive engagement with support members to add rigidity to the conveyor lengths.

In particular, conveyors of this type may be supported in a particular plane or inclination by sitting on a guide or support surface (not shown) so that the lower face (256) engages with such supports. Alternatively, the channels (54) may receive cooperating flanges of a support member (again not shown) to support the conveyor in an alternative manner.

With particular reference to Figure 4a, the conveyors (14) and (16) are shown (for illustrative purposes) in engagement with their respective associated discs (37) and (39). In this manner, it will be appreciated that as the conveyor extends about the drum (20), one of the discs (38) provides a first flange (56) for engagement with an inner channel (54) of the conveyor (14) whereby the outer channel (54) of the conveyor (14) is supported by the arcuate bar member (44) to provide adequate support as the belt extends in its arcuate path about the drum member (20). Similar engagement is achieved with the disc (39) and associated bar member (44) with the belt conveyor (16). Since the conveyor only engages the drum about half the circumference remote from the main spiral, the bar members (44) need only extend half way about the drum.

In the embodiment shown here, each of the discs (38) are rotatable about the fixed column (40) so as to support rotational displacement of their respective spirals about the drum. However, it is also feasible that the discs themselves may be secured from rotation about the column (40) whereby the conveyor (12) would merely be supported by these discs and associated bar members (44) in a rotational path whereby the belt (14 and (16) will pass over these discs in sliding engagement.

In addition, whilst the drum shown in Figure 4 and 4a comprises discs with large cut-out areas (156) it will be appreciated that this is merely to reduce weight and costs of the equipment.

The bar members (44) are supported by extra frames (58) which are restrained from displacement about the column (40) by transversely extending support beams (60) mounted on the column (40).

The drum (20) shown in Figure 4 and Figure 4a is, as discussed, is the adjustable central drum for supporting the inner ends of both spirals (14) and (16) (reference Figure 1). The corresponding outer drums (18) and (22) are similar in design but since each of these outer drums only supports the outer end of one associated spiral conveyor (14) or (16), only one disc of each pair of discs (37) and (39) is required and thus the unused disc may be removed. If the unused disc is to be removed, appropriate spacing elements must be retained on the drum column to maintain or achieve the desired pitch between successive discs. However, the operation of the discs in relation to the conveyor remains the same. For clarity, a similar cross sectional view of drum (22) would have then lower discs (39) omitted whereas a similar cross sectional view of the drum (18) would omit discs (37).

However, these drums (18), (20) and (22) differ in one significant aspect with regard to similar drum units used in the prior art. As is clearly seen in Figures 1 and 4a, the arcuate path of each level of a spiral conveyor extending around these drum members is maintained in a plane substantially perpendicular to the axis (42) of the drum member. In this manner, the arcuate path about the drum members followed by the conveyor is maintained in a horizontal plane. The prior art spiral conveyor effectively follows an inclined path extending about the circumference of the drum to achieve a change in level of the spiral.

However, it has been found that inclining an arcuate path for spiral conveyors of this type places additional strain on the products carried by such conveyors which, in the case of delicate rod like articles such as cigarettes or filters, can result in damage to the products themselves. However, if the arcuate paths are maintained on a horizontal plane, these additional stresses are minimised and thus the possibility of additional damage is significantly alleviated.

It is well understood that a spiral arrangement necessitates a change in level between successive branches of the spiral and, whilst such change in level of the prior art occurred by inclining arcuate pathways about the drums, the current invention effects the necessary change of level on the conveyor path extending between the adjacent drum members (18, 20) and (20, 22) respectively.

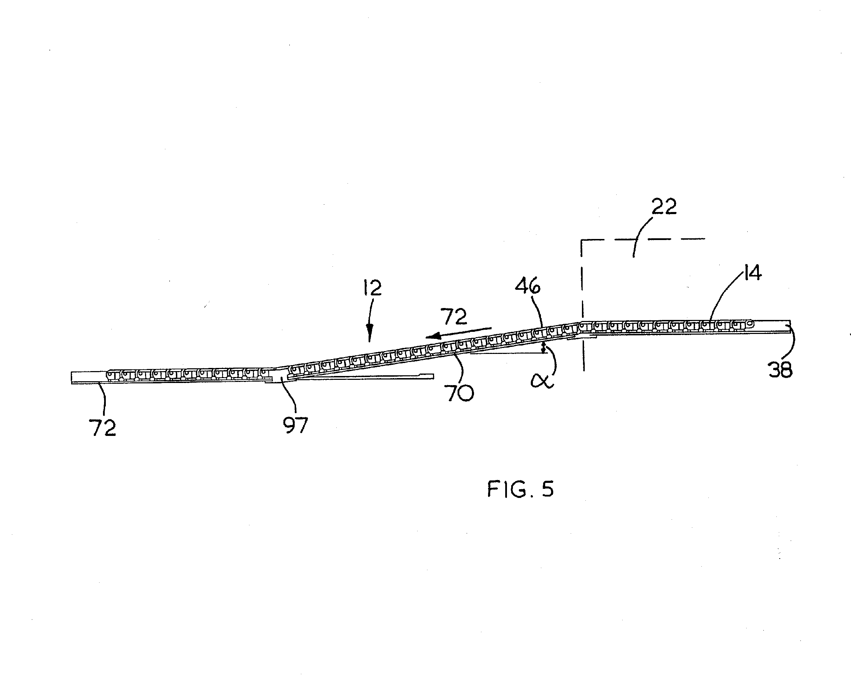

Referring now to Figure 5, this shows schematically the drum member (22) having a disc (38) conveying the belt (16) off the drum in the direction of arrow (72) as the disc (38) rotates about this drum (22). Each disc (38) of the drum (22) has an associated inclined guide ramp (70) which engages with the conveyor (12) in a manner similar to that of the disc (38) by having flanges (not shown) for engagement with the channels (54) of each of the link elements (46). This ramp (70) being restrained relative to the drum (22) so that as the horizontal conveyor (14) is driven off the drum (22) it is displaced down this inclined ramp (70) for a predetermined distance until the conveyor (12) then engages and is supported by a substantially horizontal guide surface (72) which simply supports the base (56) of the conveyor (12) which rests thereon. As seen in Figure 5, the angle α of the ramp (70) with respect to the horizontal is preferably 7°. However, this angle may itself be varied from 1° to 15° if so required. The exact length of the ramp (70) is predetermined for the particular use of this type of reservoir system to effect the desired pitch between successive vertical branches of the spiral. For greater pitch, the angle α could be increased or the length of the ramp (70) increased.

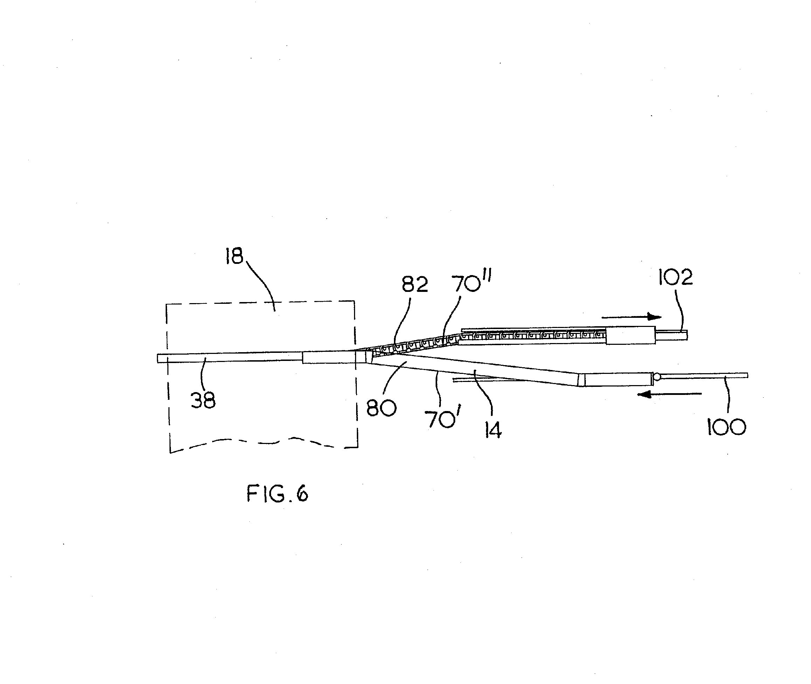

Alternatively, in the preferred embodiment shown herein, and particularly with reference to Figure 1, it is seen that the central drum (20) does not have any guide surfaces associated therewith but that each of the fixed outer drums (18) and (22) have inclined ramps (70) associated with both the input path of the conveyor leading into the drum and also with the drum conveyor output path. This effects a dual height change of the spiral path between the product input branch (80) and product output branch (82) of each arcuate path about the drum (22). This is illustrated in Figure 6 showing a partial side elevation of the conveyor belt path (14) about the associated drum (18) as viewed in Figure 1. Here the product input branch (80) of the conveyor (14) firstly follows a substantially horizontal supported path (100) towards the drum (18) until it engages with a first inclined guide means (70) displacing the belt upwards, when viewed in Figure 6, into engagement with the disc (38) of the drum (18), thereby effecting a change in height of the belt between the horizontal spiral path (100) and the horizontal disc path (38). As the conveyor subsequently leaves the drum member (18), it then engages with a second associated guide ramp (70") effecting a second change of height of the conveyor to a second horizontal flow path (102) thereby effecting a two step change in height of the belt path between the belt input and belt output path about the drum (18). Again this is simply one preferred embodiment to effect desired height change and it will be appreciated that there are many variants within the scope of this invention to effect the appropriate change of height on the successive branches of the spiral arrangement by the use of ramp surfaces. For example, instead of the substantially horizontal path of the conveyor (14, 16) between adjacent drum members, the path may follow a series of ramped inclinations using similar ramp members. In addition, or alternatively, whilst the preferred embodiment illustrated in Figure 1 does not have any ramp guide means (70) associated with the central drum (20), it is clear from the understanding of the present invention that either of the ramp members (70" or 70"") could be displaced so that one or other is associated with the adjustable drum (20). Alternatively, the adjustable drum (20) may additionally include further ramp members (70) associated with its belt input and belt output paths to effect a further change of level in the spiral. Here, such ramp members (70) would need to be secured from displacement relative to the drum (20) whereby such drum (20) is displaceable (as will be described later) between the two fixed drum members (18, 22). With reference to Figure 5, such ramps would have an end link (97) which engaged with the flat base member (72) so as to be retained from vertical displacement relative thereto but to be slideable therealong so that transition from this sloped conveyor path length to the flat path length occurs at the end link (97) wherever that is disposed along the associated flat path (72). Alternatively still, the end link (97) may in fact be secured from relative longitudinal displacement along this path (72) and the ramp (70) may be omitted completely whereby the inclination is maintained by keeping the conveyor length in tension between the output of the drum (22) and the end link (97) whereby movement of the drum towards or away from this end link (97) results in a change in the angle α. In such an embodiment, appropriate conveyor tensioning would be required maintain conveyor integrity.

One important feature regarding the inclination of the path lengths of the spiral is that for the product conveying length (14), it is important that a regular pitch is maintained between successive vertical branches of the spiral path, since the product conveyed by such reservoir is formed as a carpet of articles usually between 70 and 100mm deep. Thus the pitch must be greater than the maximum height of the carpet to prevent damage to the product carpet. Thus this pitch between successive branches of the product conveying spiral must also be maintained about the drums (18, 20) and in particular about drum (20) which, due to the provision of two discs (37, 39) the pitch between top disc (37) of one pair of discs and the bottom disc (39) of an adjacent pair of discs (P3) must also be greater than the maximum carpet depth for this type of reservoir (referring to Figure 4a, the pitch between adjacent discs (36, 39) of each pair of discs (P4) is under no such constraints since the conveyor (16) does not carry any product and simply requires that the conveyor (16) is disposed sufficiently below conveyor (14) to prevent engagement both conveyors overlap as they enter/exit the drum (20).

In its simplest form, in a non adjustable spiral FILO reservoir, the ramp means (70) could be employed to achieve a gradual inclination at a desired angle along the entire conveyor length between adjacent drum members forming the spiral. Such continuous guide means could physically restrain the belt in this complete inclined path or may simply employ guide means at either end to tension the path at two different heights to achieve the same inclination, provided sufficient tension can be maintained in the conveyor belt (12).

Whilst there are many variants to achieve inclination of the belt (12) in its spiral path arrangement remote from the drum members, it is important that the conveyor (14) is maintained in a substantially horizontal plane when it effects the arcuate transition at the opposed ends of the spiral arrangement.

However, whilst the preferred embodiment shown in Figure 1 provides that both spirals (14, 16) maintain their arcuate path lengths on a horizontal plane, the second spiral path (16) of the conveyor does not in fact carry any product and therefore is not subject to the same constraints requiring its arcuate lengths to be maintained in horizontal plane.

A second major innovative feature of the current apparatus resides in the manner in which the capacity of the reservoir is selectively adjusted. Whilst it will be appreciated that the benefits of maintaining the arcuate path of the conveyor spiral path (14) in a horizontal plane is applicable to any reservoir system, whether it be First In First Out or First in last out and whether that reservoir itself be adjustable, the current embodiment is directed specifically to an adjustable FIFO reservoir with a significant inventive concept being derived from the manner of adjustment of the reservoir capacity.

It is well known in the field of adjustable conveyor design to provide for a spiral conveyor path to provide maximum storage capacity occupying a minimum amount of floor space by providing successive layers of product on the conveyor, one above another, with the only limitations being the physical height of the environment in which the apparatus is used (ie. the ceiling). For non adjustable FIFO equipment, a known capacity reservoir is provided which, by careful control and determination of the flow rate of the conveyor belt, provides a storage facility for the product carried around that path for a predetermined length of time. This may be useful in the situation where, for example, the products are required to flow along a path for a desired time to allow sufficient drying of the product itself before passing to the next stage or to a packaging machine. However, such apparatus does not achieve the objective of varying the capacity of such a reservoir to accommodate increase in volumes of product in the event that the packaging or other output equipment becomes incapacitated. It also fails to address the problems of maintaining a product output flow at a desired rate in the event that product input is impeded (such as by the manufacturing equipment failing). For this reason, FIFO equipment has been designed providing for a variable capacity. The prior art FIFO designs utilise a continuous endless conveyor belt forming a spiral around two associated drums whereby one of the drums is displaceable relative to the other as to increase the length therebetween which concurrently increases the length of each branch of the spiral therebetween offering a significant increase in volume of the reservoir when required since volume capacity is increased by the number of path lengths of the spiral times the displacement, since each path length in increased by that displacement. Thus a relatively small relative displacement can create a significant increase in storage capacity.

To explain this further, with reference to Figure 3, the present invention comprises two spirals (14,16) whereby the exact path lengths of each spiral in an unactuated position can be preset dependent on the users needs (and thus the path lengths are shown here broken to indicate that this is by way of example only and larger or smaller reservoir capacities are equally feasible (compare Figure 1 and Figure 2)).

The reservoir (10) of Figure 3 (also with reference to Figure 1) comprises a conveyor input portion (90) leading into the first lower branch of the spiral (14) about the drum (18). The conveyor then forms a first spiral path between drums (18), (20) increasing in height about drums (18, 20) until the conveyor exits this spiral along conveyor output portion (91), and travels towards the output station (26). The continuous endless conveyor (12) is then fed back through a series of chain idler wheels (92), Figure 1, and a conventional conveyor tensioning means (94) to form an input branch (95) of the second spiral (16) extending between drums (20) and (22) to an output branch (96) of this second spiral, which output branch (96) is then displaced about a further series of chain idler wheels back to the input station (24) to complete the continuous endless conveyor about wheel (93) and is thus fed back into the conveyor input portion (90) of the first spiral (14).

This reservoir receives the product at input station (24) from which it is transferred to the first spiral (14) and then displaced in a spiral path about the two drums (18) and (20) to the output station (26). In this manner the first spiral conveyor (14) carries product, while no product is carried on the second spiral (16).

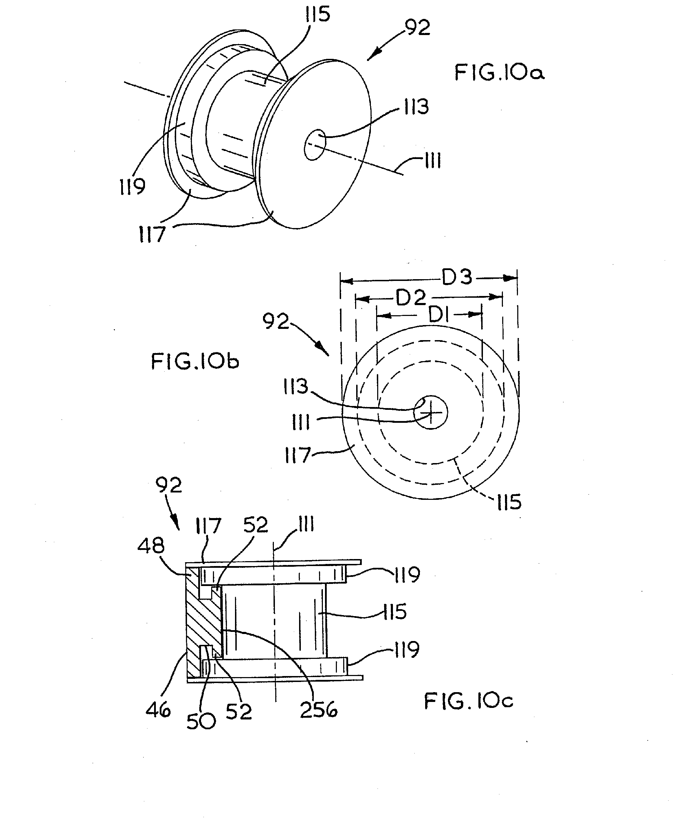

The chain idler wheels (92) are clearly shown in Figures 10a through 10c and comprise a plastic moulded cylindrical wheel design having an axis (111) (although any conventional material may alternatively be used). This wheel (92) comprises an axial extending bore (113) for mounting on an appropriate axle to rotate thereabouts, and basically comprises a maximum external diameter D3 (Figure 10b) having a thinner tubular core (115) of diameter D1 extending between two parallel and opposed circular end faces (117) having the maximum diameter D3. Both the walls (117) and the core (115) are mounted coaxial of the axis (111). Extending inwardly from each of the side walls (117) are two circular stepped portions (119) extending (117) partway along the axial length of the core (115). The stepped portions (119) have a diameter D2 intermediate diameter D1 and D3 so as to form a substantially stepped cross sectional profile as viewed in Figure 10c.

Referring now to Figure 4c, showing a cross sectional view of conventional conveyor belts used in this type of reservoir system, it is well understood that the conveyor belts used comprise a substantially T-shaped cross section. When such conveyor belts are passed around idler wheels (92) of the type herein described, the broad upper platform (48) of the belt is of appropriate width so as to provide a complimentary fit between the two opposed side walls (117) and to rest on the two opposed circular stepped portions (119) as shown in Figure 10c. In such a position, the trunk member (50) and outwardly extending flanges (52) are subsequently accommodated within a rebate formed about the narrower core (115) of the wheel (92) between the two opposed stepped portions (119). Preferably, the diameters D1 and D2 of the core (115) and stepped portions (119) are designed so that the upper platform (48) rests upon outer surfaces of the stepped portions (119), whilst the lower face (256) of the conveyor will rest upon the surface of the core (115). Again it is noted that the axial distance between the two stepped portions (119) is of complimentary size to the width of the flanges (52) of the conveyor (46). Alternatively, it will also be appreciated that only one of the surfaces (56) or (48) need engage and be mounted upon a cooperating surface of the wheel (92) to provide sufficient support for the conveyor, whilst conversely the conveyor (46) could be aligned within the appropriate idler wheel (92) by simply providing a complimentary cooperating fit between the platform (48) and the two opposed end walls (117) or between engagement of the flanges (52) with the side walls of projection (119), within the rebate formed between these stepped portions (119). In the current embodiment, engagement is effected on both portions (46, 52) of this T-shaped conveyor belt to provide maximum efficiency in alignment of the belt around such idler wheels.

As will be appreciated from Figure 1, the conveyor belt (12) will pass about a series of such idler wheels (92) around the entire reservoir system so that the lower portion (56) of the conveyor belt (12) will be either disposed on an inner curve of the belt path about such wheel (as shown in Figure 10c) or disposed, alternatively, on an outer curved path about such idler wheels ie. the upper surface or platform (48) is in engagement with the idler wheel (92) whilst the trunk member (50) is disposed radially outwards from the idler wheel. This can be appreciated from viewing the conveyor path about the tensioning means (94) in Figure 1. In this latter case, it will be appreciated from viewing Figure 10c, that the trunk element (50) will project in an opposite direction to that shown in Figure 10c whereby only the platform (48) will be received in engagement with the wheel (92) so as to lie between the end plates (117) and sit upon the stepped portions (119). In this situation, the trunk (50) is usually displaced outside of the wheel (92), and alignment and support of the conveyor (12) on this wheel (92), in this mode, is effected purely by the outer side walls (17). It will now be appreciated that this simple design of idler wheel (92) provides for a single wheel design which can be used throughout the reservoir system of the preferred embodiment irrespective of the direction of curvature of the conveyor belt (12) about such idler wheel, due to the fact that the idler wheel can accommodate both the upper portion (48) of the conveyor belt as well as the lower T-shaped portion (50), (52). It will be appreciated from the above description that the core diameter D1 could alternatively be significantly reduced since it is not essential to engage with the conveyor (46), and additionally, the diameter D2 of the stepped portions (119) can also be varied, the only requirement being that there is sufficient difference between the diameters D1 and D2 to accommodate both the trunk member (50) of the conveyor portion (46) and the outwardly extending flanges (52), and secondly, that the width between the opposed walls (117) is sufficient to achieve a complimentary fit with the width of the conveyor belt itself to provide sufficient alignment. The major benefit of this design of idler wheels is to provide a single component which allows freedom of design in running the conveyor (when not carrying product) about the reservoir.

Whilst drums (18) and (22) comprise rotatable discs (38) (as previously described) to facilitate rotatable displacement of the conveyor about these drums, the two outer drums (18, 22) themselves are restrained from displacement relative to one another, defining a maximum size of the reservoir. However, drum (20) comprises pairs of rotatable discs (38) and furthermore its central column whilst restrained from rotational displacement is laterally displaceable between the two fixed outer drums (18) and (20) (as indicated by arrow 100 in Figure 3). Displacement of drum (20) from the position shown in Figure 3 from left to right towards drum (22) effects an increase in the spiral (14) by increasing the length of the conveyor branches between drums (18) and (20). This increase in length of spiral (14) is compensated by complimentary reduction in the length of the spiral (16) effected by reduction in the distance between drums (20) and (22). Such complimentary adjustment is effective due to the first spiral path (14) having the same number of branches as the second spiral path (16).

The innovative concept in this arrangement resides in the fact that two spiral paths are simultaneously adjusted in length in a complimentary fashion by displacement of a single member between them both, about which both spiral paths pass. Such an arrangement provides for a considerable reduction in volume occupied by previous adjustable variable capacity storage reservoirs. In this manner, the two conveyor spirals (14, 16) provide two distinct portions, notably a product transportation spiral (12) and a conveyor return branch (16) (in this particular example a second spiral) whereby the purpose of the conveyor return branch is simply to provide conveyor capacity when necessary to increase the length of product transportation branch and secondly to store excess conveyor length when the product conveying length (spiral) is reduced. By providing a complimentary spiral in the manner discussed above provides a very effective means for achieving this complimentary adjustment of the main spiral (14), whereby alternatively interleaving the branches of the two spirals onto a single drum member (20) provides for a significant height reduction in comparison to prior art systems and thus in the volume occupied by previous conveyors of this type.

Not only does this particular design allow for a more compact variable capacity reservoir, but also provides a reservoir with a reduced height compared to prior art machines. In particular, one of the limitations of reservoirs of this type is a possible maximum height determined by the ceiling height of the plant in which the machine is used. Prior art equipment often necessitated that the conveyor return branch (the take up path length) of this type of reservoir be disposed vertically above the main storage reservoir, effectively reducing the overall operative height of the equipment and limiting the capacity of the reservoir. However, the reservoir according to the present invention can now better utilise the height since the conveyor return length is maintained length wise of the main storage reservoir (14) to allow for a more ergonomic design for placement in a manufacturing environment.

In addition, whilst this preferred embodiment is shown with the three drum members lying in the same vertical plane it will be appreciated that the adjustable drum member (20) need not be displaced directly between these drums to operate in the manner previously discussed, the only requirement being that displacement of the drum member is displaceable in two directions, the first direction increasing the length of the first spiral (14) whilst simultaneously decreasing the length of the second spiral (16) and vice versa.

As is commonly understood in conveyor reservoir systems of this type the conveyor belt itself is driven by a motorised conveyor drive means (not shown) associated with the product input station (24) and product output station (26), which drive mechanisms are conventional and provide for positive motor driven engagement with the belt at these two stations to control the conveyor speed. In this manner, the speed of the conveyor belt (12) at the input station and the output station can be varied independently of each other. In practice, where the reservoir capacity is maintained at constant (ie. no displacement of the drum (20) so as to maintain a constant reservoir volume ) then the conveyor speed is maintained constant along its entire length and thus the speed of the conveyor controlled by the input drive and the output drive are consistent.

Referring again to Figure 3 it will be understood that if disruption to the product output occurs (such as a result of process failure of the packaging equipment to which the product output is directed), then the output speed of the output branch (92) of the first spiral (14) can be reduced or stopped altogether, if necessary, without the need for disrupting or altering the input speed of the input branch (90) of this spiral (14). In this manner, the conveyor input speed is maintained constant, whereby the conveyor (12) fed into the input station (24) is in fact drawn, by the motorised drive means associated therewith, from the corresponding conveyor return branch (16) (drawn from the output branch (96) of the third drum (22)). This effectively causes the adjustable drum member (20) to be displaced or drawn from left to right as viewed in Figure 1 towards the end drum member (22).

Such displacement of the drum member (20) in this direction also effects an increase in the product carrying length (14) of the reservoir system to take up the conveyor belt (12) being driven into the reservoir by the motor at the input station (24). The drum member (20) is automatically adjusted towards the third member (22) by control of the input speed and output speed of the conveyor of this reservoir. Conversely, if the input drive was to be stopped and the output drive maintained at a constant speed then the output drive would serve to draw the conveyor belt (12) from the drum (20) effectively displacing the drum (20) from right to left as viewed in Figure 1 reducing the size of the reservoir capacity. This is best appreciated with viewing Figure 3 in its simplistic form whereby if the conveyor output (91) is stopped and the input portion (90) maintained at a constant speed, effectively causing displacement of the output branch (96) from drum (22) at a constant speed, then the displacement of the output branch at (96) causes automatic displacement of the drum member (20) from left to right (since input (95) into this second spiral (16) is stopped). Conversely, if the speed of input (90) is stopped and the speed of outward (91) maintained at a constant pace then the conveyor (12) which is displaced at output (91) must be provided by displacement of the adjustable member (20) from right to left as viewed in Figure 3 whereby conveyor belt through the output station (91) is returned to the second spiral (16) by input station (95) and is drawn therein by this effective displacement of the drum member (20) from right to left. In this manner, it will be appreciated that adjustment of the drum member (20) to vary the capacity of the reservoir and product return branch of the conveyor is effected automatically by careful control of the input and output speeds of the reservoir system. This carefully controlled displacement of the adjustable drum (20) in a direction towards the drum (22) provides for appropriate automatic accommodation of the conveyor being continuously fed into the first spiral (14) until such time that the reservoir output (91) is again operated. Similarly, should product input be disrupted then conversely the product output branch (91) of the conveyor may be maintained at a constant speed, with appropriate displacement of the drum (20) from right to left as viewed in Figure 3 so as to supply appropriate conveyor length (carrying product) to the output (92) to maintain product output constant, irrespective of the input speed or whether or not the product input branch (90) of the spiral is stopped completely. This operation will be understood from conventional adjustable spiral reservoirs of this type.

Whilst the first preferred embodiment shown in Figures 1 to 3 utilises two complimentary spirals to provide the product transportation branch and the conveyor return branch of this continuous conveyor reservoir, it is well understood in the art that the product return branch of such systems are not essentially required to comprise the complimentary spiral arrangement as shown in Figure 1. In particular, whilst considerable care is necessary for the design of the product transportation branch of such reservoir to ensure that the product is carefully supported in the correct planes without significant increase in incline or angle to ensure the product does not suffer undue stress, such constraints are not observed for the conveyor return branch of such a continuous belt, since this branch does not carry any product and thus does not need to be held substantially horizontal.

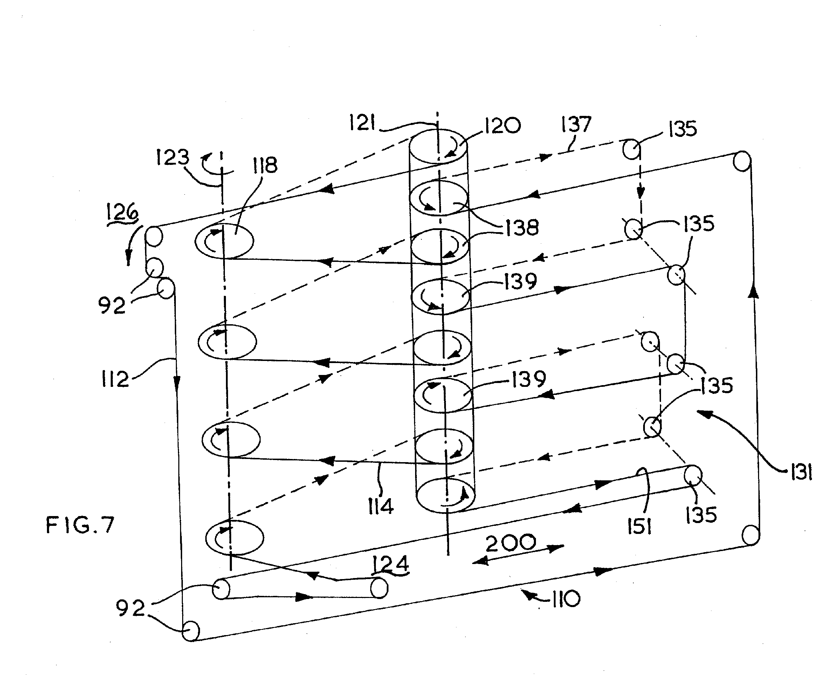

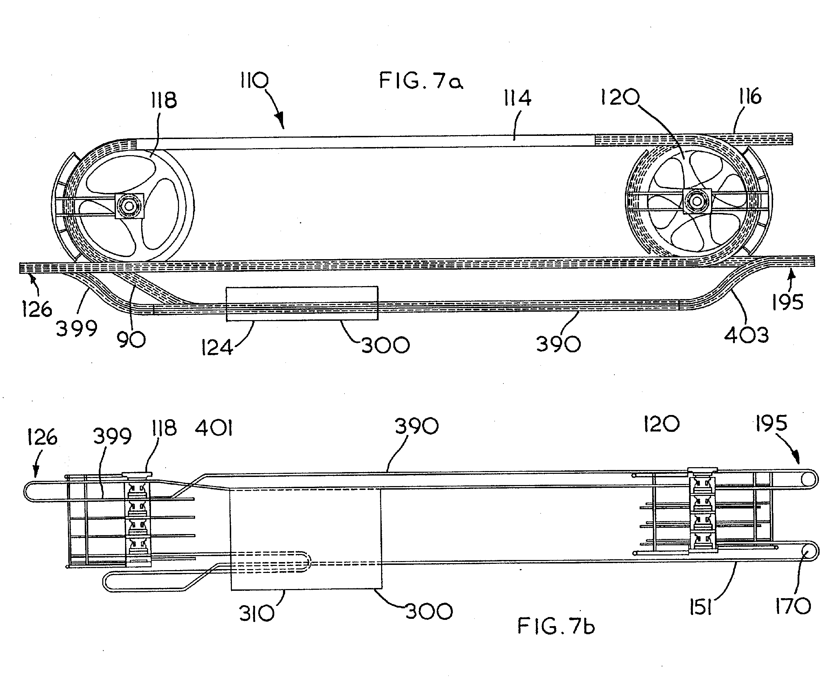

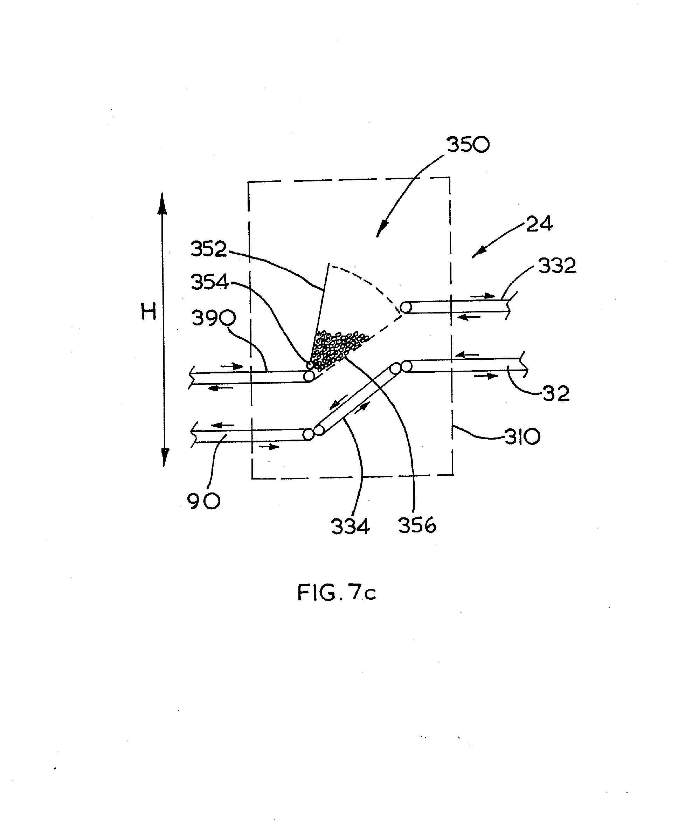

Thus, referring to Figure 7, an alternative embodiment of the current invention is now shown which achieves the same fundamental operation but in a significantly differently manner. Figure 7 shows an alternative embodiment of a conveyor path (schematically) which basically comprises a first drum member (118) secured from relative displacement to a second adjustable drum member (120) which, similar to the first embodiment, is displaceable towards and away from the first drum member (118) as indicated by arrow 200. (For illustrative purposes in this particular embodiment, the spiral path of the conveyor between these two drum members (118) and (120) is shown inclined along their entire path length, although in practice these path lengths may be maintained substantially horizontal with the use of associated ramps as described with reference to Figure 1). However, it will be preferred that the arcuate conveyor path about both drum members be again maintained in a horizontal plane, perpendicular to the vertical axis (121) and (123) of these drums (118) and (120) respectively. Here again the reservoir system will comprise a product input station (124) and a corresponding product output station (126) so that the product entering the reservoir at the input station (124) is passed around a spiral product conveying length (114) (similar to that described for the first embodiment) until it reaches the output station (126). The continuous length conveyor (112) (which may be of similar construction and shape to that previously described) is then passed around a series of idler wheels (92) to a conveyor return branch (131) of the reservoir (110) which again utilises the adjustable drum member (120) as a first transmission means so as to pass about this drum member in a manner similar to that described in the first embodiment but here, instead of forming a second spiral, the conveyor return branch in fact defines a stepped array of parallel paths extending between the drum (120) and second fixed transmission means in the form of a series of fixed idler wheels (135) (here idler wheel (135) will be of same construction as idler wheels (92) previously described). These idler wheels (135) (transmission means) are secured from displacement relative to each other and to the fixed drum (118), usually mounted on a rigid structure.

In this manner the conveyor return branch (131) passes firstly around the drum member (120) about a first disc member (138) in a manner similar to that described for the first embodiment. However, the conveyor length (137) travelling out of drum (120), whilst extending substantially parallel to the input length of the conveyor, engages with a vertical idler wheel (135) to be directed in a vertically downward direction parallel to the second drum axis (121) to a second idler wheel disposed vertically below, so as to direct the conveyor back along a horizontal plane towards the drum (120) where it again passes about the drum in a substantially horizontal arcuate path, about a further rotatable disc (139), which disc is rotatable in a direction opposite to the first disc member about which this conveyor return branch passes (as illustrated by the arrows shown in Figure 7). Again with reference to Figure 4a, it will be appreciated that the pitches between adjacent discs carrying the product conveying length of the spiral (114) may have a regular pitch or alternatively may have an irregular pitch P1 whilst it is also possible that the pitch between adjacent rotating disc (139) carrying the conveyor return branch (131) may also be of regular pitch, but more preferably in this particular embodiment this second pitch may be variable between adjacent disc (139). This conveyor then exits drum member (120) towards a second set of vertically displaced and vertically aligned idler wheels (135) to again effect a change in height of the conveyor belt and to return it back towards the drum. This process is repeated to provide a stepped array of horizontal conveyor lengths between the drum (120) and the fixed idler wheels (135) such that displacement of the drum (120) towards or away from the fixed drum (118) effects a relative decrease or increase in the product conveying length of the spiral (114) whilst creating a complimentary increase or decrease in the conveyor length of the conveyor return branch (131) of this reservoir between the drum (120) and the fixed idler wheels (135).

It will be appreciated that whilst the schematic embodiment shown in Figure 7 utilises pairs of vertically displaced parallel idler wheels (135) to effect vertical displacement of the conveyor downwards in the direction parallel to the second drum axis, it will be appreciated that these two vertically displaced idler wheels of each branch could be replaced by a single larger vertically disposed wheel member to effect arcuate displacement about that wheel in the same plane to displace the conveyor vertically downwards between vertically adjacent branches in this region. The important feature of the alternative transmission means (135) of the conveyor return branch (131) is that transmission between adjacent branches at this region occurs in a plane substantially transverse to the plane in which transmission occurs about the second support member (120). Whilst this is preferably vertical, it will be appreciated that inclination between the wheels (135) will not effect operation of this embodiment and therefore the term "transverse" is, also intended to include non-perpendicular.

With reference to Figure 7, the final output branch (151) of the conveyor return branch (131) passes a final idler wheel (135) and then is conveyed back around a series of additional idler wheels to the product input station (124) to complete the continuous endless conveyor belt. In this manner, the need of a second rotatable drum is removed providing for a simpler design of a second fixed transmission means (135), especially as the transmission of the conveyor between vertically adjacent branches of this conveyor return branch occurs in a substantially vertical direction about idler wheels acting as path transmission members. However, the principle of adjustment of the various lengths of the product transportation branch (114) and the conveyor return branch (131) remains the same, by utilising a single displaceable member between two outside fixed members and to adjust the respective lengths of the branches. It is important to note here that the discs (138) of the drum (120) are freely rotatable in either direction around an axis of that drum member, so as to allow the various path lengths of the conveyor return branch to effect rotation of the discs in appropriate directions as shown in Figure 7.

To again provide for a compact reservoir design, the branches of the product conveying spiral (114) and the branches of the stepped array of the conveyor return branch (131) are again interleaved about the central drum (120) to provide for a vertically compact reservoir.

Figure 7a shows an adjustable FIFO reservoir substantially according to the alternative embodiment of the present invention, the flow path of which is shown schematically in Figure 7. The reservoir (110) comprises a first drum member (118) secured from longitudinal displacement, together with a second, longitudinally adjustable drum member (120) which operates in a similar manner to the drum members (18) and (20) as discussed with regard to embodiment shown in Figure 1. As previously discussed, the only difference between the reservoir (110) and the reservoir (10) shown in Figure 1 relates to the different operation of the conveyor return path (116) and the structure of the alternative support means (135). However, operation of the spiral product storage conveyor (114) of the reservoir (110) is identical to that discussed with reference to reservoir (10) in Figure 1. As shown in Figure 7a, the adjustable drum member (120) is shown in the extreme right hand position such that the product conveying length (114) of the reservoir is at a maximum capacity whilst the conveyor return branch (116) is at a minimum capacity. One slight difference between embodiment (110) shown in Figure 7b and that shown in Figure 7 is that the vertically displaced pairs of associated idler wheels (135) (used to change the conveyor direction in a vertical path at the third support member) are replaced by a single wheel (170) to achieve exactly the same function of vertical displacement of the conveyor.

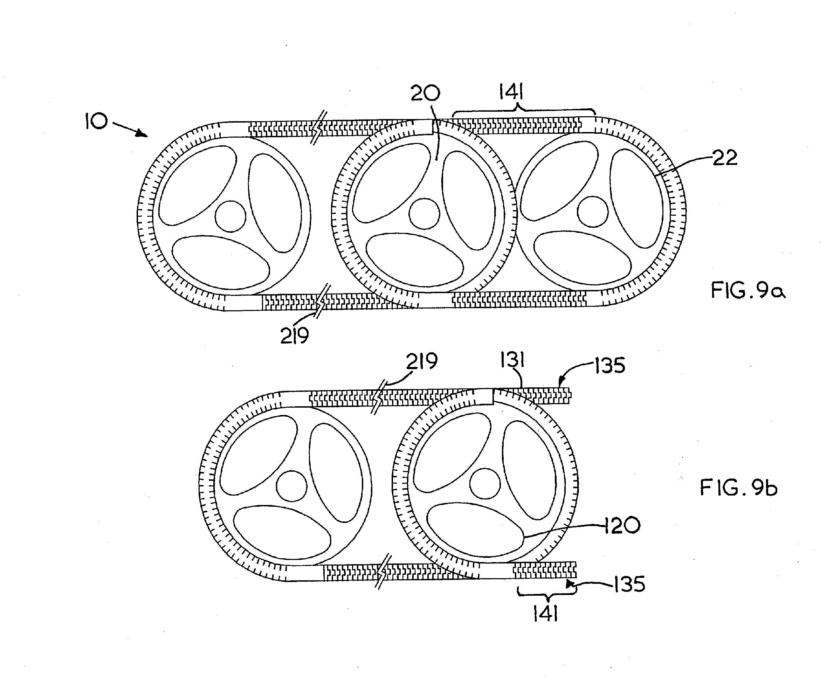

One of the major advantages of the reservoir design of Figure 7 in comparison to that of the design of Figures 1 to 3 is graphically illustrated in Figure 9a and 9b showing appropriate plan views of the apparatus of Figure 2 and Figure 7 respectively. For the first embodiment, the radius of the respective drums (20) and (22) restrict the relative displacement of the drum (20) from left to right as viewed, creating a limitation to the maximum capacity of the reservoir (specifically first spiral (14)) when compared to its overall length. This results in a residual spiral length of the product return branch (41) of reservoir (10), determined by the minimum distance to which the drum (20) can approach drum (22). However, with the embodiment of Figure 7 (Figure 9b) displacement of the drum member (120) is not restricted by a third drum (defining the second transmission means) from displacement from left to right and thus the conveyor length (141) of the various branches of the conveyor return branch (131) (when maximum storage capacity is required from the reservoir) is significantly reduced in comparison to the embodiment shown in Figure 9a thus, for an equivalent sized reservoir, the maximum product capacity is significantly increased and thus the capacity variation is also significantly increased by the path design of Figure 7.

Thus, while the spiral arrangement of the first embodiment provides for simplistic design of this equipment, the stepped path array of Figure 7 provides for a greater variable capacity or provides for a smaller reservoir machine to effect equivalent product capacity.

However, a further important development of the current invention is the positioning of the headboard (300) relative to the product conveying branch of the reservoir (10) and (110). As mentioned, reservoir (10) and reservoir (110) are substantially identical with regard to placement of the input output stations (24, 124) and operation of the product conveying length (14) in a spiral arrangement between conveyors (18) and (20) and (118) and (120) respectively. Therefore, the same reference numerals will be used to describe the headboard (300) arrangement of both reservoirs which are identical. Firstly, referring to Figure 1 the headboard (300) basically comprises the product input station (24). Whilst the product input station (24) is shown schematically in Figure 1 to comprise a meeting of two parallel conveyors to transfer a carpet of rod-like articles (cigarettes) from the first conveyor (32) to an input branch (90) of the reservoir, the actual headboard design is somewhat different and shown illustratively in Figure 7c, representing a conventional headboard operational design. Referring now to Figure 7c the product input station (24) comprises a conventional headboard or intermediate buffer (310) which, as well as providing for transfer of the product carpet to a input branch (90) of the reservoir system, also provides for an additional storage of product which is used to maintain carpet depth consistency during any changeover periods between which the input drive of the conveyor (10), (110) is stopped or restarted. Effectively, the input conveyor (32) has associated therewith an overlying parallel conveyor (332) to define a height limit to the carpet as it is transported into the headboard (310). The carpet is then transferred to an intermediate inclined transfer belt (334) (or, alternatively an angled plate could be used) to provide downward displacement of the carpet onto the product input branch (90) of the reservoir (10). The product input branch (90) has an associated upper conveyor belt (390) to help regulate a maximum carpet depth out of the headboard (310) in a conventional manner. Thus, product input on belt (32) is transferred down the inclined belt (334) (or angled plate) to the reservoir input belt (90) to maintain a consistent carpet depth. However, since the input speed of the input branch (90) of the conveyor belt is varied and occasionally stopped in operation of such a variable capacity reservoir (as previously discussed) this repeated variation can effect the carpet flow through the headboard (310) and, as such, the headboard (310) is provided with an additional temporary buffer (350) which effectively comprises a pivotal lid member (352) pivotal about an axis (354) so that in an unactuated position this lid member (352) would lie approximately parallel with the inclined belt (334) (or plate). This lid member (352) is pivotal from right to left to a maximum position shown substantially in Figure 7c whereby additional product volume (356) (usually comprising several hundred articles) is maintained above the carpet flowpath above the inclined conveyor (334) (or plate). Due to the inclined design, the product (356) maintained in this buffer undergoes a smooth through flow to ensure that product is not maintained in this area but continues to flow onto conveyor (90). In the event of interruption to the output speed of conveyor (90), the continuing input of product (356) from conveyor (32) will increase the volume of product (356) in the buffer (350). In the event of interruption of speed of input of conveyor (32) the product (356) maintained in the buffer (350) ensures that the carpet depth is maintained constant and consistent throughout operation of the reservoir. This type of buffer or headboard is conventional in use with reservoir systems used in the cigarette industry but necessitates a headboard height (H) in order to provide a sufficient buffer volume (356). The volume of the buffer (350) defines the height of the headboard.

In conventional reservoir design, the headboard (310) is positioned below the reservoir storage area (in this case product conveying spiral (14)) again adding a further depth restriction on reservoirs of this type whereby the overall depth of the reservoir equipment is defined not only by the product carrying belt depth but also additional features of the reservoir such as the headboard (310). Since it is one of the objectives of the current invention to reduce the depth limitations of this type of reservoir so that the depth of reservoirs (10) and (110) are defined by the operative product conveying belt depth, the current reservoir designs have displaced the headboard to the side of the reservoir (14) which, whilst increasing the overall width of the reservoir, significantly reduces the reservoir height.

Conventionally, where the headboard (310) was displaced below the conveyor system, the conveyor input branch (90) would then need to be inclined upwardly into the first drum member (18), usually at an angle of approximately 7° (as previously discussed 7° being a preferred maximum angle of inclination of carpet flow when passing through various heights). Therefore, depending on the exact height of the headboard (310), sufficient longitudinal distance between the input branch (90) entering the first drum member (18) and exiting the headboard (310) would be required in order to effect appropriate height transfer of the carpet from the headboard to the drum (18) when inclined at an angle of 7°. This would of course limit the exact position of the headboard relative to the reservoir. Additionally, this would limit the depth (H) of the headboard where the reservoir length was itself limited since, if the headboard height (H) was too great then the inclined input belt (90) may not be sufficient to achieve appropriate height transfer over the length of the reservoir.

In operation, it is often found that the positioning of the headboard or input station (24) is limited in relation to the various product manufacturing equipment and packaging equipment within a particular manufacturing plant which itself would then define where the reservoir was to be positioned in the production line. The current design of placing the headboard beside the product carrying conveyor (14) provides for a significant advantage whereby the input branch (90) is maintained substantially on the same plane as the first branch of the product conveying spiral (14) so that the longitudinal placement of the headboard (310) is now defined by the users requirements and not by the necessity of achieving a sufficient input inclination on the branch (90). This provides for a greater freedom of design of not only reservoirs of this type but of also the entire manufacturing production line into which such reservoirs are to be incorporated.

Whilst this novel design configuration in the placement of the headboard beside the reservoir as opposed to conventionally placing it below the reservoir, has been described in relation to an adjustable FIFO reservoir in the current embodiment, it is clearly envisaged that such a design of placing the headboard laterally as shown in Figure 7 and 7a is equally applicable to non adjustable reservoirs irrespective of whether such reservoirs are FILO reservoirs or FIFO reservoirs since the same design considerations and benefits apply to the benefit of reducing the operative height of the reservoir design together with the benefit that the headboard may be displaced anywhere along the length of the reservoir and is not constrained by the need to create sufficient ramp (90) inclination at preferred maximum 7° angle. The major benefit of this freedom of longitudinal displacement of the headboard is that the reservoir assembly itself may then be freely positioned in the production line without limitation due to the position of the product feed station (33).

As shown in Figure 7a and 7b, a further benefit of placing the headboard adjacent to the reservoir product conveying length (14) is that since the equipment is then provided with a greater overall width, this additional width of equipment can be further utilised to improve the conveyor path between the product conveying length (14) and the conveyor return length (16). This is clearly shown in Figure 7a and 7b which have modified conveyor path lengths extending between product output station (126) and the input branch (195) of the conveyor return length. In the schematic embodiment of the flowpath shown in Figure 7, the conveyor (112) is returned from the product output station (126) to the input branch (195) of the conveyor return path via a series of idler wheels (similar to those shown in Figure 10a to 10c) by passing it below the reservoir itself. Since one of the objectives is to minimise the overall height of such reservoirs, Figure 7a and 7b show a modified conveyor return path length (390) extending from the conveyor output (126) to the conveyor return path (195). In this embodiment, the output length of the conveyor (397) from the product output station (126) is firstly displaced laterally away from the reservoir (110) along a lateral displacement path (399) so as to extend in a substantially parallel path adjacent to the longitudinal lengths of the product conveying spiral (14), such path lying above the headboard (310) so as not to project above the maximum height of the reservoir spiral (114). It will also be seen in Figure 7b that this return path (390) undergoes a height change at (401) before undergoing a second lateral path change at (403) to return to a substantially vertical plane in which the height adjustment idler wheels (135) are employed to effect the appropriate vertical displacement and change of direction of the conveyor. It will be appreciated from Figure 7b that the use of idler wheels (135) shown in Figure 7 are in fact in this embodiment replaced by arcuate wheels (170) to effect the same vertical displacement and change of direction of the conveyor return path.

The conveyor output (151) of the conveyor return length is then returned via an appropriate array of idler wheels directly below the reservoir back to the input station (124) in the manner described with reference to Figure 7. In this manner, the overall height of the reservoir is again maintained as a minimum by utilising the additional lateral size of the reservoir equipment to accommodate a conveyor return flowpath (390).

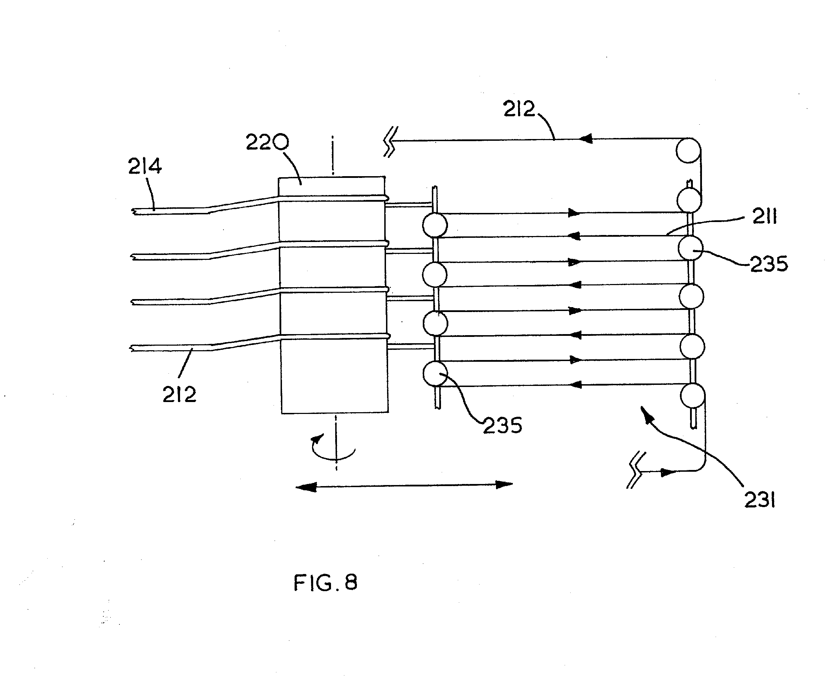

Finally, Figure 8 shows a further embodiment of the current invention whereby here the product return branch (231) of the continuous conveyor (212) extends between two parallel arrays of offset idler wheels (235). In this manner, the reservoir comprises two drums (only one of which is shown) similar to that of the previous two embodiments with a conventional spiral reservoir (214) being formed between an adjustable drum member (220) and a fixed drum member (not shown) as described for Figure 7. A continuous conveyor (212) comprises a product input station and a product output station (not shown) similar to that described in reference to Figure 7. However, in this embodiment, the conveyor return branch (231) does not pass about the adjustable drum member (220) in a horizontal arcuate path but instead the drum (220) has securely attached thereto a vertical array of vertical idler wheels (237) extending parallel to a complimentary array of idler wheels (235) which fixed relative to this displaceable drum (220) with the path length of the product conveyor return branch (231) extending in a serpentine manner between the two sets of idler wheels before finally returning to the product input station along branch (212). In this manner, as the drum (220) is displaced towards or away from the first drum member to vary the length of the product transportation spiral, the fixed array of idler wheels (237) mounted on the drum are moved away from or towards the secured idler wheels (235) to effect a complimentary adjustment in the length of the conveyor return branch. In both the embodiments of Figure 7 and Figure 8 is it essential that appropriate design is undertaken such that sufficient path length is provided on the conveyor return branch (231) to compliment the variation in the spiral length of the product conveying branch. If necessary, a series of vertical serpentine paths similar to that shown in Figure 8 could be employed rather than the one vertical array as shown in Figure 8. In such a case, one of the idler wheels (235 or 237) will be mounted horizontally to effect a horizontal displacement between adjacent serpentine arrays. Again it is significant to note that the conveyor return branch (231) comprises an array of adjustable path lengths disposed so as to be substantially interleaved between the spiral branches of the product conveying length (214) to ensure that the conveyor return branch (231) is maintained substantially between two horizontal planes defined by the upper and lower extent of the product conveying spiral (214) to ensure a reservoir having a carefully controlled height, whereby all available height is employable by the spiral of the product conveying branch of the conveyor.

As previously discussed briefly in reference to Figure 1, the conveyor (12) is provided with a tensioning means (94) or more particularly a conveyor slack elimination device (94) to maintain appropriate tension in the conveyor. Conventionally, the plastic link conveyors used in this type of reservoir are subject to stretching when first used, as the individual links (46) of the conveyor are stretched to their normal operative position. This settling of the conveyor may take several weeks and result in an increase in the conveyor length of several hundred centimetres over a conveyor length in the order of several hundred metres. It is therefore necessary to provide a means to compensate for any stretching of the belt and this is usually achieved by simple slack elimination devices as shown in Figure 1 whereby the conveyor itself is passed in a serpentine path over a series of vertical idler wheels, the lower of which idler wheels are displaceable relative to the fixed upper idler wheels and have a force applied thereto (illustratively shown here as a weight (98)) whereby this force effects downwards displacement of the displaceable idler wheels to increase the conveyor path length through this serpentine array of idler wheels and thereby compensating for any increase in length caused by stretching of the conveyor, eliminating any slack within the conveyor itself. If such slack elimination devices themselves are insufficient to compensate for all the increase in length of the conveyor in operation, the system can be temporarily shutdown whereby a number of the individual conveyor elements (46) can then be removed from the conveyor belt and the slack elimination device reset to compensate for further increases in length.

The current invention now provides for a further improvement to reservoir systems of this type by providing an integrated slack elimination device in combination with one or more of the conveyor support members or individual support means. In particular, referring now to the schematic illustration of the path length shown in Figure 7, at least one of the idler wheels (135) may be displaceable away from the second drum member (120) by an appropriate biasing force. The biasing force could involve a spring tensioned member or the application of a conventional weight applied about a fulcrum to apply a tensioning force from left to right as viewed in Figure 7. In this manner, should any increase in length in the conveyor belt (112) occur, the biasing force applied to the appropriate member (135) would effect displacement of the appropriate idler wheel (135) from left to right as viewed in Figure 7 providing an additional length of that particular branch supported by that idler wheel to compensate for the increase in length of the conveyor (112).

As previously discussed, the idler wheels (135) are preferably secured from displacement relative to each other in one embodiment of the current invention and therefore, in such an embodiment, the supporting means for all these idler wheels could alternatively be biased so as to be displaceable in a direction from left to right as viewed in Figure 7 to provide for such a slack elimination device, again with appropriate biasing force being applied simultaneously to all the idler wheels (135) shown in Figure 7. The overall operation of the adjustable reservoir as previously described remains unaffected by the integration of the slack elimination device with the support means (131) (either in combination or individually), since displacement only occurs when additional slack is observed in the conveyor and once this slack has been eliminated, further displacement of the slack elimination device is prevented by the system returning to equilibrium. In this manner, at least one of the end conveyor support members (118, 122) may be displaceable away from the second support member or drum (120), but restrained from displacement towards such drum member (120) by the appropriate biasing force.

Such an advantageous design of incorporating the slack elimination device with the product support member (131) is equally applicable to the embodiment of Figure 1 whereby here the entire drum member (22) may be biased from left to right as viewed in that Figure by the application of an appropriate biasing force to again accommodate any slack within the conveyor (12). Yet further, instead of the entire drum member (22) being biased so as to be displaceable from left to right as viewed in Figure 1, it is possible that one or more of the individual disc members may be displaceable and biased from left to right to achieve such slack elimination.

Whilst the integrated slack elimination device has been described as feasible for integration into the conveyor return path length, it is similarly envisaged that the product conveying length of such a reservoir could also utilise an integrated slack elimination device whereby here, for example, the drum members (18) or (118) of Figures 1 and Figure 7 respectively could also be biased from right to left as viewed in their respective figures by the application of an appropriate biasing force.

The essential feature of the integration of the slack elimination device into the conveyor support means in this manner is to provide a means for increasing the overall conveyor length to accommodate for any elongation of the conveyor during the initial operation whilst restraining the outer support members (18) and (22) from displacement towards the central support member (20). In this manner, it is also envisaged that a ratchet arrangement could be utilised whereby when one of the outer support members (18) or (20) is displaced away from the central support member (20) in this manner, the ratchet mechanism could be employed to prevent the displaced outer support member (18) or (22) from being displaced back towards its original position ie. back towards the central support member (20). It is already well known within the art to utilise such ratchet members on conventional slack elimination devices to maintain them in their compensatory position once achieved and to prevent them returning to their original unbiased positions whereby slack would be reintroduced to the conveyor.

Again whilst the novel feature of incorporating the slack elimination device so as to be integral with the conveyor support members or individual support means of such members is described for the preferred embodiments of the current invention, such a novel feature is equally applicable to other types of reservoirs described herein, since such slack elimination devices are commonplace in all reservoirs of this type and particularly those utilising a spiral product conveying length where one of the support members of the spiral could be biased away from the other support member with the appropriate biasing force so as to provide an integrated slack elimination device.

It will be appreciated that the major advantage of integrating the slack elimination device (or chain tension device) with one of the conveyor support members of this type of reservoir is the overall reduction in size of the reservoir itself. In the embodiment shown in Figure 1 the slack elimination device adds approximately 10% to the overall length of this reservoir design which is eliminated by integration of such device with one or other of the drums (18) or (22). In addition, such slack elimination devices are conventionally displaced either above or below the conveyor of such reservoirs and thus, to reduce the overall height of such reservoir equipment, then such integration serves to support the objectives of the current invention.

The above description of the various embodiments are by way of example only and it will be appreciated that the drive means employed for effecting continuous displacement of the conveyor belt have not been described in any detail but are considered to be well known in the art, comprising various designs of motorised wheels, often engaging the conveyor belt at or about both the product input stations and product output stations respectively so as to control the conveyor speed at appropriate positions on the continuous conveyor. However, since the operation of the drive means of such conveyor belts on variable capacity reservoirs is well understood they will not be described in detail herein.

It will also be understood that whilst the preferred embodiments are directed to FIFO equipment, they are equably applicable to First in last out variable capacity reservoirs comprising a spiral conveyor path extending around two drum members whereby the maximum capacity of such a FILO reservoir could be adjustable by utilising the embodiments herein described. In such a situation, it is simply necessary for the belt to be made reversible about its path length and for the product input station to also comprise a product output station in a manner conventional for FILO equipment.

In addition, whilst the preferred embodiments utilise drum members of the type described above to define the various spiral pathways, it will be appreciated that such drum members are not essential and could be replaced by an array of alternative transmission means to convey the conveyor in a substantially arcuate path. Such means could comprise an array of rollers or idler wheels defining a gradual displacement of the conveyor in a substantially arcuate path. Similarly, whilst the drum members described in these preferred embodiments are disposed on a vertical axis it will also be appreciated that this is not essential but could comprise an inclined axis, provided that the conveyors are maintained on a horizontal plane about any such inclined axis and that any offset spiral created by non vertical drum axis are provided with complimentary spirals on the other of the product conveying or the conveyor return branches of the continuous conveyor.

Finally, whilst the embodiments described herein discuss use of conveyor spirals (14) extending between two adjacent transmission members or drums to provide a product transportation spiral, it is also appreciated that the conveyor itself may extend around three, four or any number of a plurality of transmission members or drums to form spirals of different shapes whilst still falling within the scope of the current invention. The important feature being that the transmission of the conveyor about these transmission members be maintained perpendicular to the axis of that transmission member and preferably in a horizontal plane.

## Claims

1. A conveyor system for rod-like articles comprising a conveyer means having a first elongate conveyor length and a second elongate conveyor length and having a transmission length extending therebetween which is supported by and extends around at least one upright transmission member having a transmission axis for changing the direction of said conveyor about said axis, said first elongate length being at least partially displaced axially with respect to said second elongate length, wherein said transmission length is maintained in a first plane about said transmission member, which plane being perpendicular to said axis.

2. A conveyor system as claimed in claim 1 wherein said axis is vertical and said first plane is horizontal.

3. A system as claimed in claim either claim 1 or claim 2 wherein at least one of said first and second conveyor lengths is inclined relative to said first plane along at least part of its length remote from said transmission means to effect axial displacement of that length.

4. A system as claimed in claim 2 wherein the angle of inclination extends between 1 and 15 degrees relative to the first plane.

5. A system as claimed in claim 4 wherein the angle of inclination extends at 7 degrees relative to the first plane.

6. A system as claimed in any one of claims 3 to 5 wherein the or each of said first and second lengths are supported by an inclined guide to effect axial displacement of said associated length.

7. A system as claimed in claim 6 wherein said inclined guide extends only partway along said associated length whereby the remaining part of said length lies in a plane parallel to said first plane.

8. A system as claimed in any one of the preceding claims comprising at least two upright transmission members whereby each of said at least two transmission members has associated therewith a first and second conveyor length with an associated transmission length therebetween, with at least one transmission length being maintained in a first plane about its associated transmission member.

9. A system as claimed in claim 8 wherein both said transmission lengths are maintained in associated first planes about their associated transmission members, both said associated first planes being parallel.

10. A system as claimed in any one of the preceding claims wherein the or each transmission length defines an arcuate path.

11. A system as claimed in claim 10 wherein said arcuate path is supported on an arcuate support member mounted on said transmission member in said first plane.

12. A system as claimed in claim 11 wherein said arcuate support member comprises a wheel.

13. A system as claimed in any one of claims 8 to 12 wherein said conveyor means defines a first spiral path about and between said at least two transmission members.

14. A system as claimed in claim 13 wherein the length of said first spiral path of said conveyor means is adjustable.

15. A system as claimed in claim 14 wherein at least one of said two transmission members is displaceable relative to the other of said transmission member.

16. A system as claimed in any one of the previous claims wherein said conveyor means comprises a continuous endless conveyor.

17. A system as claimed in claim 16 when appended to claim 14 or claim 15 wherein said endless conveyor comprises an adjustable product conveying length formed by said first spiral path and an associated conveyor take up length with conveyor take up length adjustment means for effecting complimentary increase or decrease in said take up length to compensate for complimentary decrease or increase in first spiral length.

18. A system as claimed in claim 17 wherein said conveyor take up length defines a complimentary take up spiral length whose length is adjusted in a complimentary fashion between two take up transmission members.

19. A system as claimed in claim 18 when appended to claim 15 wherein an adjustable transmission member of said conveyor take up spiral coincides with said displaceable transmission member of said first spiral.

20. A system as claimed in claim 19 wherein transmission lengths of said first spiral and take up spiral extend about said coincident transmission member so as to be interleaved.

21. A reservoir system comprising a conveyor system as claimed in any one of the previous claims.

22. A reservoir system as claimed in claim 21 wherein said conveyor means flows in a single direction about said transmission means to provide a first in, first out reservoir.

23. A reservoir system as claimed in claim 21 wherein said conveyor means flows in both directions about said transmission means to provide a first in, last out reservoir.
